# EUROPÄISCHE PATENTANMELDUNG

(11) **EP 0 997 909 A1**
(43) Veröffentlichungstag der Anmeldung: **03.05.2000**
(21) Anmeldenummer: 99203526.1
(22) Anmeldetag: 25.10.1999
(51) Int. Cl.: G11B 27/11, G11B 27/10, G11B 19/02, G11B 27/36

(54) **Gerät zum Abspielen von auf einer optischen Informationsplatte digital gespeicherten Informationen**

(30) Priorität: 30.10.1998 DE 19850020
(71) Anmelder: Koninklijke Philips Electronics N.V., 5621 BA Eindhoven (NL)
(72) Erfinder: Smelt, Gerardus, 52064 Aachen (DE)
(74) Vertreter: Volmer, Georg, Dipl.-Ing.

(57) **Zusammenfassung**

Gerät zum Abspielen von auf einer optischen Informationsplatte digital gespeicherten Informationen, aufweisend
- eine Steuerschaltung, mittels derer die Darstellung und/oder Wiedergabe von Informationen, insbesondere Audio- und/oder Video-Informationen auswählbar und/oder steuerbar ist,
- einen Parameter-Speicher zum Speichern von Navigations-Parametern während des Abspielens einer Informationsplatte,
wobei das Gerät einen ersten nichtflüchtigen Speicher (9) aufweist, der mittels der Steuerschaltung (6) steuerbar ist,
daß der erste nichtflüchtige Speicher (9) zum Speichern von Navigations-Parametern vorgesehen ist,
daß die Speicherung der Navigationsparameter zusammen mit einer Informationsplattenidentizierungsinformation erfolgt, welche eine Zuordnung der Navigations-Parameter zu der jeweiligen Informationsplatte (3) ermöglicht, daß zu Beginn eines Abspielvorganges einer Informationsplatte die dieser Informationsplatte (3) zugeordneten Navigationsparameter aus dem ersten nichtflüchtigen Speicher (9) auslesbar sind und in den Parameter-Speicher (6a) einschreibbar sind.

## Beschreibung

Die Erfindung bezieht sich auf ein Gerät zum Abspielen von auf einer optischen Informationsplatte digital gespeicherten Informationen, aufweisend
- eine Steuerschaltung, mittels derer die Darstellung und/oder Wiedergabe von Informationen, insbesondere Audio- und/oder Video-Informationen, auswählbar und/oder steuerbar ist,
- einen Parameter-Speicher zum Speichern von Navigations-Parametern während des Abspielens einer Informationsplatte.

Ein derartiges Gerät ist beispielsweise aus der WO 98/09290 bekannt. Dieses bekannte Gerät ist zum Abspielen digitaler Video-Informationsplatten vorgesehen. Zur Steuerung der Darstellung des Audio- und/oder Video-Programms weist das bekannte Gerät Navigations-Kommandos und Navigations-Parameter auf. Als Navigations-Parameter werden allgemein diejenigen Parameter bezeichnet, deren Information von dem Abspielgerät während des Abspielvorganges gespeichert wird. Die Navigations-Parameter umfassen beispielsweise Parameter, denen eine vorgegebene Funktion zugeordnet ist und auch Parameter, die frei von dem Provider nutzbar sind und beispielsweise verwendbar sind, um das Verhalten des Abspielgerätes zu modifizieren oder um die von einem Benutzer durchgeführten Operationen, Entscheidungen und/oder

Navigations-Kommandos und Navigations-Parameter bilden die Grundlage für Provider von Informationsplatten, um verschiedene Titel-Strukturen zu erstellen. Die Provider können die Navigations-Kommandos und die Navigations-Parameter nutzen, um den Status des Abspielgerätes einzustellen bzw. zu verändern., beispielsweise zur Implementierung eines Eltern-Management-Systems, welches Kindern den Zugriff zu vorgebbaren Video-Programmen vorenthält.

Als Navigations-Kommandos sind beispielsweise logische Verknüpfungen wie UND und ODER, Vergleichsoperatoren wie GLEICH/UNGLEICH oder Registerbefehle vorhanden.

Mittels der Navigations-Kommandos und der Navigations-Parameter kann der Provider einfache und komplexe Verzweigungsstrukturen in einem Titel definieren.

Die Navigations-Parameter von Informationsplatten gemäß dem DVD-Standard werden zu Beginn und zu Ende eines Abspielvorganges einer Informationsplatte auf Null gesetzt.

Es ist Aufgabe der Erfindung, ein Gerät der eingangs genannten Art zu schaffen, welches es ermöglicht, die einem Abspielvorgang einer Informationsplatte zugeordneten Navigations-Parameter für spätere Abspielvorgänge nutzbar zu machen.

Diese Aufgabe ist erfindungsgemäß dadurch gelöst, daß das Gerät einen ersten nichtflüchtigen Speicher aufweist, der mittels der Steuerschaltung steuerbar ist, nichtflüchtige Speicher zum Speichern von Navigations-Parametern vorgesehen ist,
daß die Speicherung der Navigationsparameter zusammen mit einer Informationsplattenidentifizierungsinformation erfolgt, welche eine Zuordnung der Navigations-Parameter zu einer Informationsplatte ermöglicht,
daß zu Beginn eines Abspielvorganges einer Informationsplatte die dieser Informationsplatte zugeordneten Navigationsparameter aus dem ersten nichtflüchtigen Speicher auslesbar sind und in den Parameter-Speicher einschreibbar sind.

Die einem Abspielvorgang zugeordneten Navigations-Parameter können somit in dem ersten nichtflüchtigen Speicher abgespeichert und für spätere Abspielvorgänge zur Verfügung gestellt werden. In dem ersten nichtflüchtigen Speicher werden die Navigations-Parameter bei der Speicherung mit einer Informationsplattenidentifizierungsinformation, beispielsweise einer Informationsplattenidentifizierungsnummer, versehen. Diese Informationsplattenidentifizierungsnummer ist an einer vorgebbaren Stelle der Informationsplatte gespeichert. Zu Beginn eines Abspielvorganges überprüft die Steuerschaltung, ob die jeweilige informationsplatte mit einer Informationsplattenidentifizierungsinformation versehen ist. Weist die jeweilige Informationsplatte eine Informationsplattenidentifizierungsinformation auf, so überprüft die Steuerschaltung, ob zu dieser Informationsplattenidentifizierungsinformation korrespondierende Navigationsparameter in dem ersten nichtflüchtigen Speicher abgespeichert sind. Ist dies der Fall, so werden die Navigationsparameter aus dem ersten nichtflüchtigen Speicher ausgelesen und in den Parameterspeicher eingeschrieben. Alternativ kann ein Zugriffspfad zu diesen Navigationsparametern eingerichtet werden. Falls zu einer Informationsplattenidentifizierungsinformation noch keine Navigationsparameter in dem ersten nichtflüchtigen Speicher abgelegt sind, so wird vorzugsweise die eingelesene Informationsplattenidentifizierungsinformation von der Steuerschaltung in den ersten nichtflüchtigen Speicher eingeschrieben bzw. ein diesbezüglicher Zugriffspfad eingerichtet. Als Parameter-Speicher kann sowohl ein RAM-Speicher als auch ein Register-Speicher verwendet werden.

Das erfindungsgemäße Gerät hat den Vorteil, daß mittels der Abspeicherung der Navigations-Parameter ein Informationsaustausch zwischen verschiedenen Abspielvorgängen möglich ist. Der Informationsaustausch kann dabei sowohl zwischen verschiedenen Abspielvorgängen ein- und derselben Informationsplatte erfolgen. Ferner Navigations-Parameter des Abspielvorganges einer ersten Informationsplatte für den Abspielvorgang einer zweiten Informationsplatte zu nutzen. Dies ist insbesondere für Serien von Informationsplatten vorteilhaft, z.B. für einen Lernkursus mit mehreren Informationsplatten.

Die Ausgestaltung der Erfindung gemäß Anspruch 2 hat den Vorteil, daß mittels der Schnittstelle ein Datenaustausch bezüglich der Navigationsparameter mit einem externen Eingabe- und/oder Ausgabegerät möglich ist. Dadurch kann einerseits der Abspielvorgang der Informationsplatte mittels eines externen Eingabegerätes verändert und beinflußt werden. Andererseits können die in dem ersten nichtflüchtigen Speicher gespeicherten Navigations-Parameter extern ausgelesen und ausgewertet werden. Insbesondere ist es möglich, für das Abspielen einer Informationsplatte im voraus bestimmte Navigations-Parameter vorzusehen, d.h., die Art des Abspielens dieser Informationsplatte und beispielsweise bestimmte Abspielfolgen im voraus festzulegen, indem gemäß Anspruch 11 für die Informationsplatte den Abspielvorgang bestimmende Navigations-Parameter in dem ersten nichtflüchtigen Speicher im voraus abgespeichert werden. Beispielsweise ist es in einem Museum möglich, an verschiedenen Orten Abspielgeräte zu plazieren und in diesen jeweils unterschiedliche Navigations-Parameter für die gleiche Informationsplatte zu speichern. Dies ermöglicht es, daß die gleiche Informationsplatte an den verschiedenen Abspielgeräten unterschiedlich abgespielt wird, d.h., daß verschiedene Abspielgeräten bei dergleichen Informationsplatte beispielsweise verschiedene Kapitel, Abschnitte oder Inhalte abspielen.

Die vorteilhafte Ausgestaltung der Erfindung gemäß Anspruch 3 bat den Vorteil, daß die in dem ersten nichtflüchtigen Speicher gespeicherten Navigations-Parameter in einer vorgebbaren Art und Weise aktualisiert werden.

Mittels der vorteilhaften Ausgestaltung der Erfindung gemäß Anspruch 4 läßt sich die zeitliche Historie der Veränderung der Navigations-Parameter während eines oder mehrerer Abspielvorgänge aufzeichnen. Dies kann insbesondere vorteilhaft für Marketinguntersuchungen, Fehlersuche und Ähnliches angewendet werden. Der zweite nichtflüchtige Speicher wird vorteilhaft gemäß Anspruch 5 als serieller, zyklischer Pufferspeicher realisiert. Die Navigations-Parameter werden zeitlich seriell in den Pufferspeicher eingeschrieben. Wenn der Pufferspeicher voll ist, werden die ältesten Navigations-Parameter gelöscht, um Platz für neue, aktuellere Navigations-Parameter zu schaffen. Ein derartiger serieller, zyklischer Pufferspeicher ist eine einfache und kostengünstige Möglichkeit, zeitliche Abfolgen der Navigations-Parameter zu speichern. Die Weiterbildung der Erfindung gemäß Anspruch 6 bat den Vorteil, daß die zeitlichen Abfolgen der Navigations-Parameter extern auslesbar und weiterverarbeitbar sind.

Die Erfindung ist gemäß Anspruch 7 insbesondere für Geräte gemäß dem DVD Video-Standard geeignet. Gemäß dem DVD-Video Standard sind als Navigations-Parameter 16 allgemeine Parameter (General Parameter) vorgesehen, welche eine Länge von jeweils 2 Byte aufweisen. Diese allgemeinen Parameter stehen den Providern von Informationsplatten zur Verfügung, um das Bedienverhalten des Benutzers zu speichern und um das Verhalten des Abspielgerätes zu beeinflussen bzw. zu steuern. Auf die allgemeinen Parameter kann mittels Navigations-Kommandos zugegriffen werden. Mittels der Speicherung der allgemeinen Parameter in dem ersten nichtflüchtigen Speicher lassen sich Informationen eines Abspielvorganges einer Informationsplatte abspeichern. Diese Informationen können für einen späteren Abspielvorgang derselben Informationsplatte oder auch für einen späteren Abspielvorgang einer anderen Informationsplatte aus dem nichtflüchtigen Speicher geladen und für den späteren Abspielvorgang als Basis genutzt werden.

Gemäß Anspruch 8 ist das erfindungsgemäße Gerät insbesondere für Geräte gemäß dem High Quality-Video-Standard (HQ-Video) geeignet. Gemäß dem HQ-Video-Standard sind als Navigations-Parameter wenigstens 16 Benutzer-Parameter (User-Parameter) von jeweils 2 Byte vorgesehen. Gemäß der Erfindung werden diese Benutzer-Parameter in dem ersten nichtflüchtigen Speicher abgespeichert und stehen somit für spätere

Gemäß dem DVD-Standard werden die allgemeinen Parameter zu Beginn und am Ende eines jeden Abspielvorganges auf den Wert Null gesetzt.

Gemäß dem HQ-Video-CD-Standard sind die Benutzer-Parameter zu Beginn und am Ende eines jeden Abspielvorganges undefiniert.

Die nichtflüchtige Abspeicherung der Navigationsparameter stellt somit eine außerhalb des DVD-Standards und des HQ-Video-CD-Standards liegende Modifizierung dar.

Gemäß Anspruch 10 kann der Provider, d.h. der Hersteller und Vertreiber von Informationsplatten mittels der Provider-Kennzeichnungsinformation selbst bestimmen, ob seine Informationsplatte gemäß dem Standard ohne nichtflüchtige Abspeicherung der Navigations-Parameter abgespielt werden soll oder ob die in dem Gerät vorhandene nichtflüchtigen Abspeicherung der Navigations-Parameter genutzt werden soll.

Einige Ausführungsbeispiele der Erfindung werden nachfolgend anhand der Zeichnung in den Fig.1 bis 4 näher erläutert Es zeigen:
Fig. 1 ein Blockschaltbild eines erfindungsgemäßen Gerätes zum Abspielen von auf einer optischen Informationsplatte digital gespeicherten Informationen,
Fig. 2 die Speicherorganisation für die Navigations-Parameter mit einem Registerspeicher, einem ersten nichtflüchtigen Adreßspeicher und einem zweiten nichtflüchtigen seriellen Pufferspeicher,
Fig. 3 ein Flußablaufdiagramm des Einlesevorganges einer Informationsplatt des DVD-Standards,
Fig. 4 ein Flußablaufdiagramm des Abspeicherns der allgemeinen Parameter in dem ersten und/oder dem zweiten nichtflüchtigen Speicher während eines Abspielvorganges einer DVD-Informationsplatte.

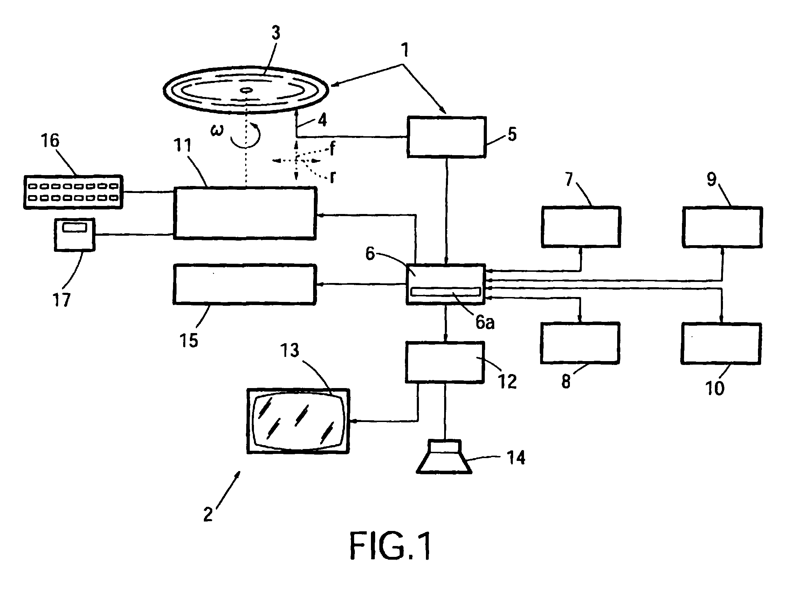

Fig. 1 zeigt ein optisches Plattenspieler-System 1 mit einem optischen Plattenspieler 2, der zum Abspielen von auf einer optischen Informationsplatte 3 digital gespeicherten Informationen vorgesehen ist. Als optische Informationsplatte 3 ist insbesondere eine Informationsplatte gemäß dem DVD-Standard oder eine Informationsplatte gemäß dem HQ-Video-CD-Standard vorgesehen. Die auf der optischen Informationsplatte 3 digital gespeicherten Informationen werden mittels einer optischen Leseeinheit 4 ausgelesen und an eine Dekodierschaltung 5 übertragen. Die Dekodierschaltung 5 ist ferner zur Fehlerkorrektur vorgesehen. Die dekodierten und fehlerkorrigierten Daten werden an eine Steuerschaltung 6 übertragen.

Die Steuerschaltung 6 ist mit einem RAM-Speicher 7, einem ROM-Speicher 8, einem ersten nichtflüchtigen Speicher 9 und einem zweiten nichtflüchtigen Speicher 10 gekoppelt. Der RAM-Speicher 7 und der ROM-Speicher 8 sind dazu vorgesehen, um den Datenstrom, welcher der Steuerschaltung 6 von der Dekodierschaltung 5 zugeführt wird, zu steuern und zu verarbeiten. Der erste nichtflüchtige Speicher 9 und der zweite nichtflüchtige Speicher 10 sind zum nichtflüchtigen Speichern von Navigations-Parametern vorgesehen. Die Steuerschaltung ist ferner mit einem Servo-System 11 gekoppelt, welches die Winkelgeschwindigkeit ω der optischen Informationsplatte sowie die Position der optischen Leseeinheit 4 hinsichtlich der Spuren der optischen Informationsplatte 3 steuert. Dies ist durch den gestrichelten Pfeil r angedeutet. Ferner steuert das Servo-System 11 die Fokussierung der optischen Leseeinheit 4, was durch den gestrichelten Pfeil f angedeutet ist. Die Steuerschaltung 6 übermittelt an das Servo-System 11 diesbezügliche Steuersignale.

Ferner ist die Steuerschaltung 6 mit einer Dekodierschaltung 12 gekoppelt. Die Dekodierschaltung 12 ist dazu vorgesehen, die beispielsweise nach dem MPEC 2-Standard kodierten Video- und Audiodaten zu dekodieren. Die Dekodierschaltung 12 liefert die dekodierten Videodaten an ein Display 13 und die dekodierten Audiodaten an einen Lautsprecher bzw. ein Lautsprechersystem 14. Zum bidirektionalen Datenaustausch mit externen Komponenten weist der optische Plattenspieler 2 ein bidirektionales Interface 15 auf. An das bidirektionale Interface 15 lassen sich eine Tastatur 16, ein externer Datenspeicher 17, wie z.B. ein Diskettenlaufwerk, sowie weitere externe Komponenten anschließen. Über das bidirektionale Interface 15 können einerseits externe Daten, die beispielsweise über die Tastatur 16 eingegeben werden, an den optischen Plattenspieler 2 übertragen werden. Andererseits können interne Daten von dem optischen Plattenspieler 2 an externe Komponenten übertragen werden, wie z.B. an den externen Datenspeicher 17.

Die Steuerschaltung 6 weist intern ein Register 6a auf, welches imstande ist, Informationen vorübergehend zu speichern und mit kurzer Zugriffszeit abzugeben.

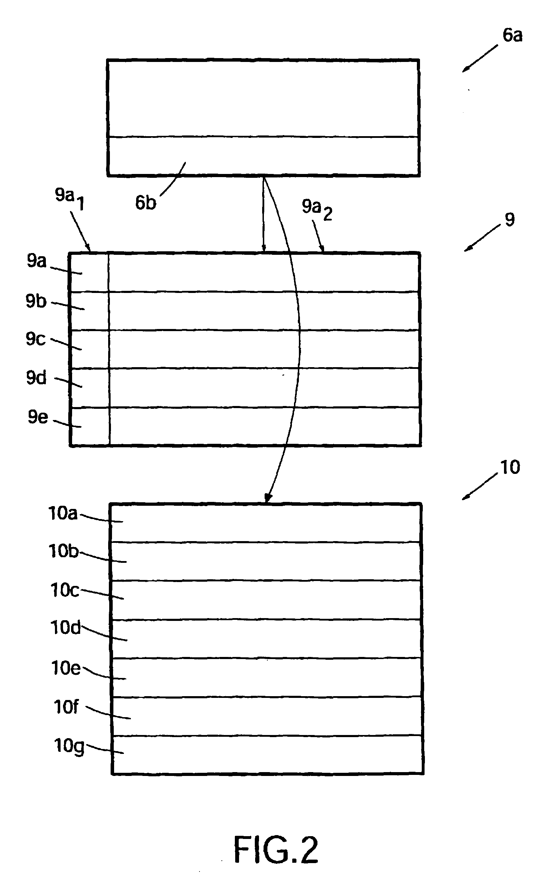

Fig. 2 zeigt beispielhaft eine genauere Darstellung des Registers 6a, des ersten nichtflüchtigen Speichers 9 und des zweiten nichtflüchtigen Speichers 10 gemäß Fig. 1. Die in der Fig. 2 dargestellten Speicherelemente sind für Geräte gemäß dem DVD-Standard dimensioniert. Gemäß dem DVD-Standard stehen als Navigations-Parameter 16 allgemeine Parameter zur Verfügung, welche jeweils eine Länge von 2 Byte aufweisen. Diese allgemeinen Parameter stehen den Providern von optischen Informationsplatten standardmäßig zur Verfügung, um beispielsweise das Bedienverhalten des Benutzers zu speichern und/oder um das Verhalten des jeweiligen Abspielgerätes zu beeinflussen bzw. zu steuern. Das Register 6a weist ein Speicherfeld 6b von 32 Byte auf, welches zur Speicherung der allgemeinen Parameter vorgesehen ist. Der erste nichtflüchtige Speicher 9 weist im vorliegenden Beispiel fünf Speicherfelder 9a bis 9e von jeweils 34 Byte auf. Die einzelnen Speicherfelder 9a bis 9e weisen Informationsplattenidentifizierungsfelder 9a₁, 9b₁, 9c₁, 9d₁ und 9e₁ von jeweils 2 Byte auf sowie Navigations-Parameterfelder 9a₂, 9b₂, 9c₂, 9d₂ und 9e₂ von jeweils 32 Byte auf. Die Navigations-Parameterfelder 9a₂ bis 9e₂ sind zum Speichern der allgemeinen Parameter des DVD-Standards vorgesehen. Die Informationsplattenidentifizierungsfelder 9a₁ bis 9e₁ sind jeweils zur Speicherung einer Informationsplattenidentifizierungsnummer vorgesehen, welche eine Zuordnung zwischen den abgespeicherten allgemeinen Parametern und der jeweiligen zu diesen allgemeinen Parametern korrespondierenden Informationsplatte ermöglichen. Der zweite nichtflüchtige Speicher 10 ist als serieller, zyklischer Pufferspeicher ausgebildet.

Er weist im folgenden Beispiel sieben Speicherfelder 10a, 10b, 10c, 10d, 10e, 10f und 10g auf, welche jeweils 32 Byte umfassen. Der zweite nichtflüchtige Speicher 10 ist dazu vorgesehen, eine zeitliche Abfolge der allgemeinen Navigations-Parameter zu speichern. Im vorliegenden Beispiel weist der zweite nichtflüchtige Speicher keine Informationsplattenidentifizierungsfelder auf, um Speicherplatz zu sparen und den Speicher möglichst einfach zu realisieren. Es ist jedoch auch möglich, mehrere serielle zyklische Speicher vorzusehen und diese jeweils mit einem Informationsplattenidentifizierungsfeld zu versehen, um auch von verschiedenen Informationsplatten zeitlich serielle Abfolgen der allgemeinen Navigations-Parameter speichern zu können. Die Speicherfelder 9a bis 9e des ersten nichtflüchtigen Speichers 9 lassen sich jeweils einzeln adressieren. Der zweite nichtflüchtige Speicher 10 hat nur eine gemeinsame Speicheradresse. Neu zu speichernde Navigations-Parameter werden immer jeweils zunächst in das oberste Speicherfeld 10a des zweiten Speichers 10 eingeschrieben. Bei dem darauffolgenden Speichervorgang werden die neuen Navigations-Parameter in dem obersten Speicherfeld 10a gespeichert und die sich bereits in dem zweiten nichtflüchtigen Speicher 10 befindlichen Navigations-Parameter werden jeweils ein Speicherfeld weiter nach unten geschoben, d.h. die Navigations-Parameter des Speicherfeldes 10a in das Speicherfeld 10b, die Navigations-Parameter des Speicherfeldes 10b in das Speicherfeld 10c usw. Die in dem untersten Speicherfeld 10g gespeicherten Navigations-Parameter werden bei einem nachfolgenden erneuten Speichervorgang gelöscht. Somit befinden sich in dem zweiten nichtflüchtigen Speicher 10 jeweils die letzten sieben gespeicherten allgemeinen Navigations-Parameter.

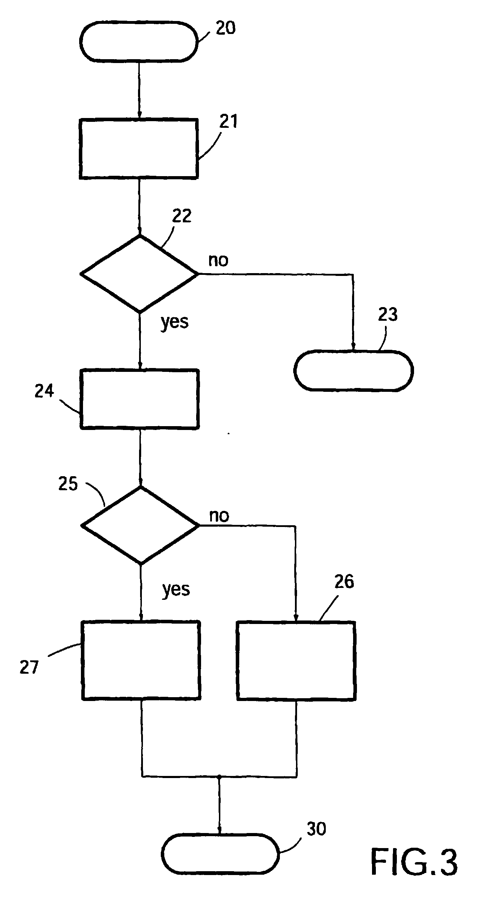

Fig. 3 zeigt ein prinzipielles Flußablaufdiagramm des Einlesevorganges einer Informationsplatte des DVD-Standards. Dieser Einlesevorgang wird immer dann ausgeführt, wenn eine Informationsplatte 3 in den optischen Plattenspieler 2 eingebracht wird.

Ein erster Block 20 repräsentiert das Ereignis 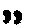 Informationsplatte-Ein", d.h. daß eine optische Informationsplatte 3 in den optischen Plattenspieler 2 gemäß Fig. 1 eingebracht wird. Danach wird in einem Block 21 eine Provider-ID eingelesen. Die Provider-ID ist eine Kennzeichnungsinformation, die auf einer definierten Stelle der DVD-Informationsplatte standardmäßig gespeichert ist. Anhand der Provider-ID wird in einem nachfolgenden Schritt 22 geprüft, ob der optische Plattenspieler 2 gemäß dem DVD-Standard arbeiten soll oder ob gemäß der Provider-ID ein nicht standardmäßiges Verhalten von dem Provider gewünscht wird. Hierzu werden in dem Block 22 die letzten vier Buchstaben der Provider-ID überprüft. Weisen diese letzten vier Buchstaben eine bestimmte Buchstabenkombination auf, z.B. die Buchstabenkombination GRPM, so erkennt der optische Plattenspieler 2, daß von dem Provider ein nicht-Abspielvorganges, d.h. eine nichtflüchtige Speicherung der allgemeinenen Navigationsparameter, vorgesehen ist.

Gemäß dem DVD-Standard werden die allgemeinen Navigations-Parameter zu Beginn und zu Ende eines jeden Abspielvorganges gleich Null gesetzt. Daher ist es bei standardmäßigem Verhalten des DVD-Gerätes nicht möglich, Daten bezüglich eines Abspielvorganges einer CD zu speichern und für spätere Abspielvorgänge zur Verfügung zu stellen. Diese Möglichkeit wird mit dem nicht standardmäßigen Verhalten des optischen Plattenspielers 2 eröffnet. Sind die letzten vier Buchstaben der Provider-ID ungleich GRPM, so schaltet der optische Plattenspieler auf das standardmäßige DVD-Verhalten, was in Fig. 3 durch den Block 23 dargestellt ist. Sind die letzten vier Buchstaben der Provider-ID gleich GRPM, so erkennt der optische Plattenspieler, daß er nicht gemäß dem DVD-Standard arbeiten soll, d.h., daß die allgemeinen Parameter nicht zu Beginn und am Ende eines Abspielvorganges zu Null gesetzt werden sollen. In dem Block 24 wird daher zunächst eine Informationsplattenidentifizierungsnummer von der Informationsplatte gelesen. Diese Informationsplattenidentifizierungsnummer ist an einer definierten Stelle der Informationsplatte gespeichert. In einem nachfolgenden Schritt 25 wird überprüft, ob die Informationsplattenidentifizierungsnummer dem optischen Plattenspieler bekannt ist, d.h., ob unter dieser Informationsplattenidentifizierungsnummer schon allgemeine Navigations-Parameter in dem ersten nichtflüchtigen Speicher gespeichert sind. Ist dies nicht der Fall, so wird die eingelesene Informationsplattenidentifizierungsnummer in einem Schritt 26 in eines der Informationsplattenidentifizierungsfelder 9a₁ bis 9e₁ eingeschrieben und das zugeordnete Speicherfeld somit für die Speicherung der zugeordneten Navigationsparameter initialisiert. Hierzu wird eines der Speicherfelder 9a bis 9e ausgewählt, welches noch nicht belegt ist. Sind bereits alle Speicherfelder 9a bis 9e mit Informationen belegt, so wird das Speicherfeld mit der ältesten Information Informationsplattenidentifizierungsnummer zur Verfügung gestellt. Gleichzeitig wird der Zugriffspfad zu dem vorgesehenen Speicherfeld eingerichtet.

Wird in dem Block 25 festgestellt, daß die Informationsplattenidentifizierungsnummer bekannt ist und zu dieser Informationsplattenidentifizierungsnummer allgemeine Navigations-Parameter in dem ersten nichtflüchtigen Speicher 9 gespeichert sind, so wird in einem Schritt 27 der Zugriffspfad zu demjenigen Speicherfeld der Speicherfelder 9a bis 9e eingerichtet, in dem die der jeweiligen Informationsplattenidentifizierungsnummer zugeordnetem allgemeinen Navigations-Parameter gespeichert sind.

In dem sich anschließenden Abspielvorgang, dargestellt durch den Block 30, stehen nun die bei Ende des vorherigen Abspielvorganges der Informationsplatte gespeicherten allgemeinen Navigations-Parameter zur Verfügung.

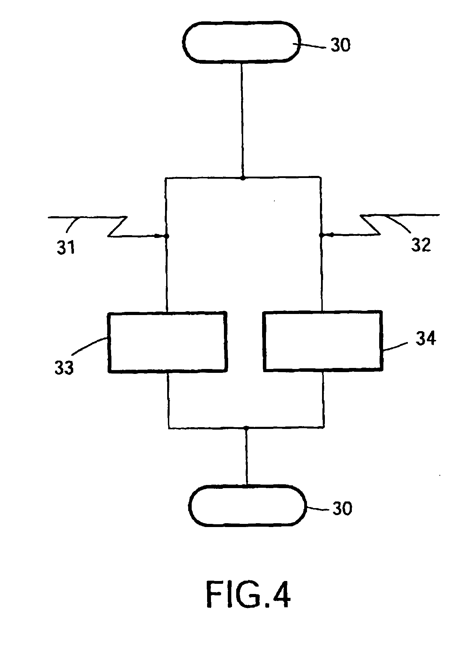

Fig. 4 zeigt ein Flußablaufdiagramm des Abspeicherns der allgemeinen Parameter in den ersten nichtflüchtigen Speicher 9 und in dem zweiten nichtflüchtigen Speicher 10 sowie des Ladens der allgemeinen Parameter aus dem ersten nichtflüchtigen Speicher 10 während eines Abspielvorganges einer DVD-Informationsplatte, wobei das Abspeichern und das Laden mittels der Steuerschaltung 6 gesteuert wird. Zunächst befindet sich der optische Plattenspieler 2 hinsichtlich des ersten nichtflüchtigen Speichers 9 und des zweiten nichtflüchtigen Speichers 10 in einem Wartezustand 30. Während dieses Wartezustandes 30 findet ein Abspielvorgang der optischen Informationsplatte 3 statt, d.h. der Steuerschaltung 6 werden mittels der optischen Leseeinheit 4 und der Dekodierschaltung 5 kontinuierlich Informationen zugeführt. Entsprechend den der Steuerschaltung 6 zugeführten Informationen können sich auch die in dem Speicherfeld 6b des Registers 6a gespeicherten allgemeinen Navigations-Parameter ändern. Die Änderung der allgemeinen Navigations-Parameter ist davon abhängig, auf welche Art und Weise der Provider der Informationsplatte von den allgemeinen Navigations-Parametern Gebrauch macht. Der Provider der Informationsplatte kann durch entsprechende Programmablaufstrukturen auf der Informationsplatte bestimmen, wann bzw. unter welchen Bedingungen die allgemeinen Navigations-Parameter aus dem Register 6a in den ersten nichtflüchtigen Speicher 9 und/oder den zweiten nichtflüchtigen Speicher 10 geschrieben werden sollen. Hierfür sind zwei spezifische Kommandos vorgesehen, welche von der Steuerschaltung 6 erkannt werden. Als erstes Steuerkommando ist eine Addition des Wertes Null zu dem Speicherfeld 6b des Registers 6a vorgesehen. Eine derartige Addition des Wertes Null ändert nichts an dem Speicherfeld 6b des Registers 6a. Allerdings erkennt die Steuerschaltung 6, daß ein derartiger, das Register 6a nicht beeinflussender Steuerbefehl in dem von der Informationsplatte 3 gelieferten Datenstrom vorhanden war. Dieses Ereignis 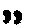 Addition von Null zu dem Speicherfeld 6b des Registers 6a" ist in dem Flußablaufdiagramm gemäß Fig. 4 als 31 bezeichnet. Tritt dieses Ereignis 31 auf, so speichert die Steuerschaltung 6 die in dem Speicherfeld 6b des Registers 6a gespeicherten allgemeinen Parameter in dem ersten nichtflüchtigen Speicher 9 unter der jeweiligen Informationsplattenidentifizierungsnummer sowie gleichzeitig in dem obersten Speicherfeld 10a des zweiten seriellen nichtflüchtigen Speichers 10. Dies ist in Fig. 4 als Block 33 dargestellt. Nach Durchführung dieser Speicherung geht der optische Plattenspieler 2 erneut in den Wartezustand 30. Als weiterer Steuerbefehl bezüglich des ersten nichtflüchtigen Speichers 9 ist der Steuerbefehl 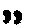 Subtrahiere Null von den in dem Speicherfeld 6b gespeicherten allgemeinen Navigations-Parametern". Dieses Ereignis ist in dem Flußablaufdiagramm gemäß Fig 4 als 32 bezeichnet. Der Wert der in dem Speicherfeld 6b gespeicherten allgemeinen Navigations-Parameter wird durch diesen Befehl 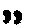 Subtrahiere Null" ebenfalls nicht verändert. Die Steuerschaltung 6 erkennt jedoch, wenn sich ein derartiger Befehl in dem von der optischen Informationsplatte 3 ausgelesenem Datenstrom befindet. Bei Erkennung dieses Steuerbefehls lädt die Steuerschaltung 6 die allgemeinen Navigations-Parameter aus dem ersten nichtflüchtigen Speicher 9 in das Speicherfeld 6b des Registers 6a. Danach geht das System bezüglich der Speicheroperationen des ersten Speichers 9 und des zweiten nichtflüchtigen Speichers 10 wieder in den Wartezustand

Die in dem ersten nichtflüchtigen Speicher 9 sowie dem zweiten Speicher 10 gespeicherten allgemeinen Navigations-Parameter können mittels des bidirektionalen Interfaces 15 sowohl von extern ausgelesen als auch von extern verändert werden. Zum externen Auslesen kann eine externe Datenverarbeitungseinheit verwendet werden. Zur externen Beeinflussung sind beispielsweise Pager, eine Tastatur, oder ein Bar-Codeleser denkbar.

Mit dem erfindungsgemäßen System ist es somit möglich, Zwischenresultate eines Abspielvorganges einer Informationsplatte in dem ersten nichtflüchtigen Speicher 9 bzw. dem zweiten nichtflüchtigen Speicher 10 zu speichern und für spätere Abspielvorgänge zur Verfügung zu stellen. Ferner ist es mittels des seriellen zweiten nichtflüchtigen Speichers möglich, zeitliche Abfolgen der Veränderung der allgemeinen Navigations-Parameter aufzuzeichnen, über das bidirektionale Interface 15 auszulesen und dann mittels externer Datenverarbeitungseinheiten auszuwerten.

Außerdem ist es mittels des bidirektionalen Interfaces möglich, Informationen für das Abspielen einer Informationsplatte extern in den ersten nichtflüchtigen Speicher 9 einzuschreiben und das Abspielen der Informationsplatte dadurch von extern zu beinflussen und zu steuern.

## Patentansprüche

1. Gerät zum Abspielen von auf einer optischen Informationsplatte digital gespeicherten Informationen, aufweisend
- eine Steuerschaltung, mittels derer die Darstellung und/oder Wiedergabe von Informationen, insbesondere Audio- und/oder Video-Informationen auswählbar und/oder steuerbar ist,
- einen Parameter-Speicher zum Speichern von Navigations-Parametern während des Abspielens einer Informationsplatte,
dadurch gekennzeichnet, daß
das Gerät einen ersten nichtflüchtigen Speicher (9) aufweist, der mittels der Steuerschaltung (6) steuerbar ist,
daß der erste nichtflüchtige Speicher (9) zum Speichern von Navigations-Parametern vorgesehen ist,
daß die Speicherung der Navigationsparameter zusammen mit einer Informationsplattenidentifizierungsinformation erfolgt, welche eine Zuordnung der Navigations-Parameter zu der jeweiligen Informationsplatte (3) ermöglicht, Abspielvorganges einer Informationsplatte die dieser Informationsplatte (3) zugeordneten Navigationsparameter aus dem ersten nichtflüchtigen Speicher (9) auslesbar sind und in den Parameter-Speicher (6a) einschreibbar sind.

2. Gerät nach Anspruch 1, dadurch gekennzeichnet, daß das Gerät eine Schnittstelle aufweist, vorzugsweise eine bidirektionale Schnittstelle, mittels derer in den ersten nichtflüchtigen Speicher Navigations-Parameter extern einschreibbar und/oder extern auslesbar sind.

3. Gerät nach Anspruch 2, dadurch gekennzeichnet daß die Speicherung der Navigationsparameter in dem ersten nichtflüchtigen Speicher (9) am Ende jedes Abspielvorganges und/oder in vorgebbaren Zeitintervallen und/oder bei externer Veränderung der Navigationsparameter vorgesehen ist.

4. Gerät nach Anspruch 1, dadurch gekennzeichnet, daß das Gerät einen zweiten nichtflüchtigen Speicher (10) aufweist, der dazu vorgesehen ist, zeitliche Abfolgen der Navigationsparameter zu speichern.

5. Gerät nach Anspruch 4, dadurch gekennzeichnet daß der zweite Speicher (10) ein serieller, zyklischer Pufferspeicher ist, in den die zeitlichen Abfolgen der Navigationsparameter seriell eingeschrieben werden.

6. Gerät nach Anspruch 5, dadurch gekennzeichnet, daß das Gerät ein serielles Interface (15) aufweist, mittels dessen der Inhalt des zweiten nichtflüchtigen Speichers (10) seriell auslesbar ist.

7. Gerät nach Anspruch 1, dadurch gekennzeichnet, daß das Gerät ein Abspielen von Informationsplatten nach dem DVD-Standard ist und daß als Navigations-Parameter die Allgemeinen Parameter gemäß dem DVD-Standard für die Speicherung in dem ersten nichtflüchtigen Speicher vorgesehen sind.

8. Gerät nach Anspruch 1, dadurch gekennzeichnet, daß das Gerät ein zum Abspielen von Informationsplatten nach dem HQ-Video-Standard ist und daß als Navigations-Parameter die Benutzer-Parameter gemäß dem HQ-Video-Standard für die Speicherung in dem ersten nichtflüchtigen Speicher vorgesehen sind.

9. Verwendung des Gerätes nach Anspruch 1 zum Abspielen eines Satzes von Informationsplatten, wobei mittels der Abspeicherung der den jeweiligen Informationsplatten des Satzes zugeordneten Navigationsparameter ein Informationsübertragung zwischen den einzelnen Informationsplatten des Satzes

10. Gerät nach Anspruch 1, dadurch gekennzeichnet, daß das Gerät zu Beginn eines Abspielvorganges zum Lesen einer Provider-Kennzeichnungsinformation von der Informationsplatte vorgesehen ist, wobei die Provider-Kennzeichnungsinformation eine Information aufweist, ob von dem Provider der Informationsplatte eine Verwendung des ersten nichtflüchtigen Speichers vorgesehen bzw. gewünscht ist, und daß in Provider-Kennzeichnungsinformation der erste nichtflüchtige Speicher zum Lesen und/oder Speichern der Navigationsparameter entweder verwendet oder nicht verwendet wird.

11. Verwendung des Gerätes nach Anspruch 2 zum Vorbestimmen des Abspielvorganges einer Informationsplatte, indem den Abspielvorgang der Informationsplatte beinflussende Navigationsparameter über die Schnittstelle in dem ersten nichtflüchtigen Speicher abgespeichert werden.
